# FASCICULE DE BREVET EUROPEEN

(11) **EP 1 652 439 B1**
(45) Date de publication et mention de la délivrance du brevet: **12.12.2007**
(21) Numéro de dépôt: 04425811.9
(22) Date de dépôt: 28.10.2004
(51) Int. Cl.: A43B 5/04, B29D 31/518, A41B 11/00, A43B 7/34

(54) **Coque de chaussure de sport avec chaussette de confort**
Schale für einen Sportschuh mit Innensocke
Shell for sports shoes with inner sock

(43) Date de publication de la demande: 03.05.2006
(73) Titulaire: LANGE INTERNATIONAL S.A., 1700 Fribourg (CH)
(72) Inventeur: Perotto, Riccardo, 31040 Venegazzu (IT); Roux, Pascal, 38120 Saint Egreve (FR)
(74) Mandataire: Bugnion Genève

(56) Documents cités:
- EP-A- 0 182 245
- AU-A- 1 591 583
- FR-A- 1 565 339
- FR-A- 2 612 948

## Description

L'invention concerne une coque de chaussure de sport ou un sous-ensemble de coque de chaussure de sport ainsi que la chaussure de sport elle-même, et est particulièrement adaptée au domaine des chaussures pour planche de glisse telle que ski ou surf ou des chaussures de patinage, qui subissent des efforts importants lors de leur utilisation et pour lesquelles une structure particulièrement résistante est nécessaire et qui ont pourtant besoin d'un niveau de confort élevé, notamment concernant leur chaleur. L'invention porte aussi sur un procédé de fabrication d'une telle coque.

Une chaussure de ski est un bon exemple de chaussure de sport qui exige d'une part une résistance importante et d'autre part un niveau de confort élevé. En effet, une telle chaussure subit de nombreux efforts lors de son utilisation et doit par conséquent être dotée d'une bonne résistance. Une forte rigidité est aussi nécessaire pour atteindre une bonne performance de la chaussure qui, en tant qu'intermédiaire entre le skieur et le ski, transmet les efforts du skieur au ski afin de guider ce dernier. Toutefois, ses contraintes au niveau du confort sont aussi élevées. La chaussure doit notamment posséder une souplesse suffisante pour permettre au skieur de l'ouvrir pour la chausser et l'enlever, lui permettre de fléchir ses genoux vers l'avant pour skier, et lui assurer un confort suffisant, particulièrement au niveau de la chaleur, malgré son utilisation dans les conditions extrêmes de température et dans un environnement humide et agressif.

Pour répondre à ces contraintes élevées et contradictoires, des chaussures de l'art antérieur se composent d'une tige rigide dans laquelle est inséré un chausson. La tige rigide se compose d'une coque entourant le pied et d'un collier articulé sur cette coque et entourant le bas de la jambe. Cette tige est en matériau rigide et est réalisée par un procédé de bi-injection de deux matériaux plastiques de rigidité différente dont la quantité de chacun de ces matériaux est prévue sur chaque zone de la tige pour répondre aux exigences de rigidité et de confort. Le chausson intérieur, destiné à recevoir le pied, a pour fonction de garantir le confort du skieur.

Ces chaussures conventionnelles présentent les inconvénients suivants :
- la tige est souvent trop inconfortable pour le skieur et les chaussons ne suffisent pas à compenser cette faiblesse pour atteindre un niveau global de confort satisfaisant ;
- la tige exige des chaussons complexes pour tenter d'obtenir un confort maximal ;
- la tige présente une esthétique limitée.

Le brevet FR1565339 décrit une solution légèrement différente qui consiste à prévoir une doublure au sein de la coque et un procédé de fabrication basé sur le surmoulage d'un matériau plastique sur cette doublure mise en forme dans un moule. Cette solution est toutefois insuffisante pour répondre aux contraintes de confort et de rigidité.

Le brevet EP1172042 décrit une chaussure constituée d'une tige souple en matériau textile en forme de botte et d'une coque injectée en plastique relativement rigide, la tige et la coque étant solidarisées par l'injection entre la tige souple et la coque, par le bas, d'une matière plastique souple. Cette solution est toutefois insuffisante pour répondre aux contraintes de confort et de rigidité.

Le document FR 2612948 propose des protections thermiques vestimentaires autonomes utilisant le principe de réflexion des rayons calorifiques sur la face brillantée de l'aluminium ou de tout autre métal.

Il existe donc un besoin d'une autre solution pour tenter d'atteindre les contraintes de rigidité et de confort, particulièrement au niveau de la chaleur, rappelées ci-dessus.

Un objet de la présente invention consiste à proposer une chaussure de sport qui ne présente pas les inconvénients de l'art antérieur.

Plus précisément, un premier objet de la présente invention consiste à proposer une chaussure de sport qui offre un bon confort, particulièrement au niveau de la chaleur, et présente une bonne rigidité.

Un second objet de l'invention consiste à proposer une chaussure de sport dont l'esthétique est attrayante.

Un troisième objet de la présente invention consiste à proposer une chaussure de sport dont le procédé de fabrication reste simple.

Selon le concept de l'invention, la chaussure de sport repose sur une tige dont le confort est amélioré par l'intermédiaire d'une paroi comprenant une chaussette intérieure de confort qui comprend des propriétés thermiques isolantes vis à vis du rayonnement thermique.

Plus précisément, l'invention repose sur une coque de chaussure de sport dont au moins une partie de la paroi se compose d'une chaussette recouverte d'une couche rigide en matériau plastique caractérisée en ce que la chaussette comporte sur sa surface intérieure un moyen isolant limitant les pertes de chaleur par rayonnement le moyen isolant étant

polyuréthane comportant des particules de matériau possédant des propriétés de réflexion du rayonnement thermique, ces particules pouvant être de l'aluminium.

Selon une autre variante, l'enduit en polyuréthane forme une première couche intérieure de la chaussette, qui est recouverte par une couche intermédiaire en mousse isolante contre la conduction de la chaleur, puis par une troisième couche en matériau compatible pour permettre le surmoulage d'un matériau plastique.

La chaussette peut occuper une large surface entourant le pied, et être reliée à une partie en matériau plastique souple formant au moins un rabat sur le cou de pied, qui peut lui-même être lié à une partie très souple, en cuir, plastique ou tissu, pour former au moins un rabat très souple.

Avantageusement, le matériau plastique rigide recouvre alors la chaussette et sa liaison avec le matériau plastique souple. Un troisième matériau plastique peut aussi recouvrir la zone frontière entre ces deux matériaux plastiques.

L'invention porte aussi sur une chaussure de sport, particulièrement adaptée pour une chaussure de ski, comprenant une coque telle que décrite précédemment.

L'invention porte aussi sur le procédé de fabrication d'une coque de chaussure de sport comprenant les étapes suivantes :
- réalisation d'une chaussette à partir d'un tissu possédant une propriété d'isolation thermique au rayonnement au moyen d'un enduit en polyuréthane comportant des particules de matériaux possédant des propriétés de réflexion du rayonnement thermique.
- mise sur forme de la chaussette obtenue ;
- surinjection d'un matériau plastique sur la totalité de la surface occupée par la chaussette.

Ce procédé peut comprendre une étape de liaison de la chaussette possédant une échancrure avec un premier matériau plastique souple pour former au mois un rabat couvrant l'échancrure, puis la surinjection du second matériau plastique de manière à recouvrir cette liaison entre la chaussette et le premier matériau plastique, puis la surinjection d'un troisième matériau plastique sur la zone de liaison entre les deux premiers matériaux plastiques.

Ces objets, caractéristiques et avantages de la présente invention seront exposés en détail dans la description suivante d'un mode d'exécution particulier fait à titre non-limitatif en relation avec les figures jointes parmi lesquelles :
La figure 1 représente une vue en perspective d'une coque de chaussure de ski selon un mode d'exécution de l'invention ;
la figure 2 représente schématiquement ce que serait une vue en coupe selon II-II de la coque de la figure 1, dont les épaisseurs des différentes couches sont volontairement exagérées et les formes simplifiées pour des raisons de clarté.

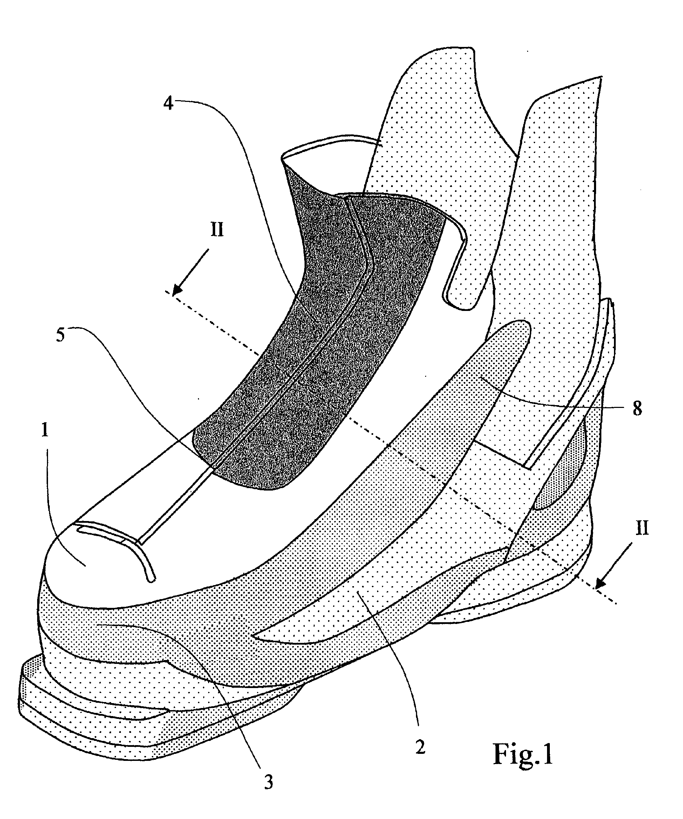

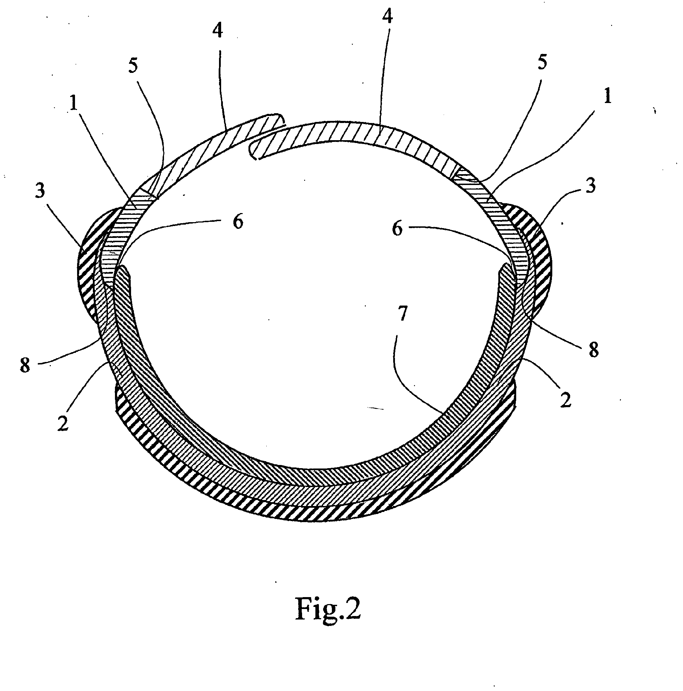

Les figures 1 et 2 illustrent un mode d'exécution très sophistiqué de l'invention appliquée à une coque de chaussure de ski. Cette coque se compose de trois matériaux plastiques 1, 2, 3 obtenus par trois injections. La zone en matériau plastique 1 est relativement souple et reliée à des parties plus souples 4, en cuir, en plastique ou en tissu, par une couture 5 pour former deux rabats souples dans la zone correspondant au cou de pied et s'étendant jusque dans le bas de la jambe pour faciliter le chaussage. L'autre extrémité de ces parties en matériau plastique 1 est reliée par une couture 6 à une chaussette intérieure 7 présentant donc une échancrure au niveau de la zone du cou de pied, comme représentée à la figure 2.

La chaussette 7 occupe une large surface autour du pied et comprend de l'aluminium pour former une paroi possédant une propriété de réflexion du rayonnement thermique, ce qui a pour effet d'éviter le refroidissement du chausson intérieur et plus particulièrement du pied placé dans ce chausson, qui est à une température plus élevée que l'extérieur, par rayonnement de chaleur. On utilise plus précisément pour cette chaussette un tissu enduit de polyuréthane aluminisé, l'enduction étant placée sur la face intérieure de la chaussette en vis à vis avec le chausson, possédant, grâce à la présence de particules d'aluminium, la propriété thermique recherchée, associée de plus à une propriété élastique bi-directionnelle grâce à l'enduction de polyuréthane, avantageuse pour la mise en forme et la fabrication de la chaussette et de la coque. Ce tissu présente de plus un aspect esthétique attrayant qui rend visible et met directement en valeur l'effet technique utilisé dans la présente invention.

Une variante de réalisation de cette chaussette 7, non représentée, consiste à prévoir trois couches superposées :
- la couche intérieure sera de même un tissu enduit de polyuréthane aluminisé ;
- une couche intermédiaire comportera une mousse isolante, pour limiter les déperditions de chaleur par conduction de chaleur tout en remplissant une fonction d'amortissement des chocs ;
- une couche en matériau d'accrochage compatible avec le plastique 2 surinjecté pour permettre un surmoulage et une bonne adhésion comme cela sera décrit plus loin. Le matériau d'accrochage peut être un tissu tissé ou non tissé.

Comme variante supplémentaire, d'autres particules métalliques que l'aluminium offrant des propriétés similaires peuvent être utilisées.

Enfin, une autre variante de fabrication peut consister à coller des morceaux ou découpes de film d'aluminium sur la surface intérieure de la chaussette. Afin d'obtenir l'élasticité nécessaire à la mise en forme de la chaussette, ces morceaux de feuille d'aluminium seront plus petits sur les parties de la chaussette 7 nécessitant une grande élasticité car subissant une déformation importante lors de la mise en forme, correspondant aux parties latérales du pied par exemple, et des bandes de plus grandes dimensions seront utilisées pour les autres parties de la chaussette, comme la semelle et le bout du pied. Une sorte de mosaïque de morceaux d'aluminium sera donc créée sur la surface intérieure de la chaussette, permettant d'obtenir un effet équivalent à celui obtenu par les variantes précédentes. En remarque, il n'est pas nécessaire de recouvrir l'intégralité de la surface de la chaussette ; toutefois l'effet obtenu sera d'autant plus important que la surface du pied couverte sera importante, et plus particulièrement les surfaces les plus vulnérables au froid.

Finalement, la caractéristique essentielle de l'invention est que la chaussette 7 comporte sur sa surface intérieure un moyen isolant limitant les pertes de chaleur par rayonnement.

L'ensemble de la chaussette 7 est recouvert par un matériau plastique 2 rigide qui donne à la coque sa rigidité dans sa partie basse. Cette zone en matériau plastique 2 occupe donc une surface entourant le pied autour d'une large échancrure s'étendant sur le cou de pied et remontant jusqu'au bas de la jambe. Elle recouvre aussi la couture 6 entre le rabat et la chaussette 7 afin de la protéger et de garantir son étanchéité. Le matériau plastique 2 est obtenu par une injection sur la chaussette 7 et sur la couture 6, ce qui donne comme résultat une adhésion entre la zone en matériau 2 et la chaussette 7.

Le matériau de la chaussette 7 est donc choisi pour supporter la température du matériau plastique injecté.

Enfin, dans le mode d'exécution représenté, des zones en un troisième matériau plastique 3 sont obtenues par une troisième injection. Ce matériau 3 permet d'obtenir des effets esthétiques en des zones de la coque où seul le matériau 2 est présent ainsi que des effets esthétiques attrayants dans d'autres zones cumulant les trois matériaux différents, tout en permettant d'obtenir des propriétés mécaniques différentes par la combinaison des matériaux plastiques de propriétés différentes. De plus, ce matériau 3 recouvre une surface importante de la zone de liaison 8 entre les deux précédents matériaux plastiques 1 et 2, ce qui améliore les performances de cette liaison en terme de longévité, d'étanchéité, de résistance. En effet, cette zone 8 comprend les axes de rotations des rabats formés par le matériau plastique 1 et la partie très souple 4 par rapport à la coque plus rigide en matériau plastique 2 et subit donc des efforts répétitifs particuliers. De plus, cette zone 8 comporte aussi la couture 6 entre la chaussette 7 et le matériau 1, fragile par nature et non étanche. Pour ces raisons, cette zone est plus vulnérable et justifie la superposition des trois matériaux plastiques 1, 2, 3 obtenue par tri-injection.

En résumé, une première solution pour atteindre les objets recherchés consiste à prévoir une coque dont la paroi comporte une chaussette intérieure possédant des propriétés d'isolation aux déperditions de chaleur par rayonnement et un aspect esthétique attrayant. Une seconde solution complémentaire consiste à prévoir des rabats souples à base de plastique souple, cuir, tissu ou tout matériau souple équivalent. Une troisième solution consiste à prévoir une tri-injection pour superposer trois couches de matériaux plastiques sur certaines zones présentant une vulnérabilité particulière.

Le mode d'exécution précédent sophistiqué décrit précédemment en référence aux figures 1 et 2 combine les trois solutions précédentes à titre d'exemple.

Toutefois, d'autres variantes ou combinaisons sont envisageables. Par exemple, une des solutions les plus simples pourrait consister en une coque composée d'une chaussette comprenant un enduit de polyuréthane aluminisé, recouverte par un seul matériau plastique formant aussi les rabats, obtenu par une seule étape d'injection de plastique.

L'invention porte aussi sur le procédé de fabrication d'une telle coque de chaussure de ski, qui comprend les étapes suivantes :
- réalisation d'une chaussette 7 sur le cou de pied, à partir d'un tissu sensiblement élastique et possédant une propriété d'isolation thermique au rayonnement ;
- mise sur forme de la chaussette 7 obtenue ;
- surinjection d'un matériau plastique 2 sur la totalité de la surface occupée par la chaussette 7.

La première étape peut consister à utiliser un tissu enduit de polyuréthane aluminisé, éventuellement une couche de mousse isolante et un tissu d'accrochage.

En variante, la première étape peut consister à coller des morceaux de feuille d'aluminium sur la surface intérieure de la chaussette.

Comme cela est illustré par le mode d'exécution des figures 1 et 2 décrit ci-dessus, le procédé de fabrication peut en outre comprendre les étapes supplémentaires suivantes :
- avant la mise sur forme de la chaussette 7, liaison 6 entre la chaussette 7 présentant une large échancrure sur le cou de pied et un ensemble 1, 4 pour fermer l'échancrure et former au mois un rabat ; plus précisément, cette étape peut comprendre la réalisation d'une première couture 5 entre une partie en matériau plastique 1 formée par injection et un élément souple 4 et une seconde couture entre la partie en matériau plastique 1 et la chaussette 7.
- une dernière étape d'injection d'un troisième matériau plastique 3 pardessus les deux matériaux plastiques 1 et 2 dans leur zone de liaison 8 peut être effectuée.

Finalement, les avantages de la solution sont donc les suivants :
- la coque de chaussure conserve globalement une structure en matériau plastique classique et possède donc une rigidité importante ;
- la coque présente une paroi isolant des pertes par rayonnement thermique pour conserver la chaleur du pied, ce qui augmente son confort;
- la coque présente une esthétique attrayante de sa paroi intérieure grâce au matériau utilisé pour ses propriétés de réflexion du rayonnement, de type aluminium, qui rend de plus visible la mise en oeuvre de l'invention;
- selon une variante supplémentaire, la coque peut comprendre des rabats souples, facilitant grandement le chaussage et déchaussage de la chaussure, et augmentant donc encore son confort ;
- selon une variante supplémentaire, la coque peut comprendre la superposition de trois couches de matériau plastique, obtenue par un procédé de tri-injection, pour renforcer certaines zones qui seraient éventuellement fragilisées et augmenter l'esthétique de la paroi extérieure de la chaussure. En remarque, cette tri-injection pourrait en fait aussi être utilisée dans n'importe quelle chaussure, pour tirer un profit de sa première fonction de renfort mécanique d'une zone plus fragile et de sa seconde fonction de décoration de la surface extérieure d'une chaussure ;
- le procédé de fabrication d'une telle coque reste simple, essentiellement basé sur des étapes d'injection comme dans l'art antérieur;
- cette coque permet d'utiliser des chaussons moins chauds et/ou globalement moins confortables.

Le mode d'exécution décrit précédemment concerne les chaussures de ski mais le concept de l'invention pourrait être reproduit pour toute autre chaussure de sport présentant des contraintes similaires.

## Revendications

1. Coque de chaussure de sport pour planche de glisse dont au moins une partie de la paroi se compose d'une chaussette (7) recouverte d'une couche rigide en matériau plastique (2), la chaussette (7) adhérant au matériau plastique (2), **caractérisée en ce que** la chaussette (7) comporte sur sa surface intérieure un moyen isolant limitant les pertes de chaleur par rayonnement, et **en ce que** le moyen isolant est un enduit en polyuréthane comportant des particules de matériau possédant des propriétés de réflexion du rayonnement thermique.

2. Coque de chaussure de sport selon la revendication 1, **caractérisée en ce que** le moyen isolant est un enduit en polyuréthane comportant des particules d'aluminium.

3. Coque de chaussure de sport selon la revendication 1 ou 2, **caractérisée en ce que** l'enduit en polyuréthane forme une première couche intérieure de la chaussette, qui est recouverte par une couche intermédiaire en mousse isolante contre la conduction de la chaleur, puis par une troisième couche en matériau compatible pour permettre le surmoulage d'un matériau plastique (2).

4. Coque de chaussure de sport selon l'une des revendications précédentes, **caractérisée en ce que** la chaussette (7) occupe une large surface entourant le pied, et est reliée (6) à une partie en matériau plastique (1) souple formant au moins un rabat sur le cou de pied.

5. Coque de chaussure de sport selon la revendication 4, **caractérisée en ce que** le matériau plastique (1) est lié (5) à une partie très souple (4) pour former au moins un rabat très souple.

6. Coque de chaussure de sport selon l'une des revendications 4 ou 5, **caractérisée en ce que** le matériau plastique (2) recouvre la chaussette (7) et sa liaison (6) avec le matériau plastique (1).

7. Coque de chaussure de sport selon la revendication 6, **caractérisée en ce qu**'un troisième matériau plastique (3) recouvre la zone frontière (8) entre les deux matériaux plastiques (1, 2).

8. Chaussure de sport pour planche de glisse comprenant une coque selon l'une des revendications 1 à 7.

9. Procédé de fabrication d'une coque de chaussure de sport pour planche de glisse selon l'une des revendications 1 à 7 comprenant les étapes suivantes:
- réalisation d'une chaussette (7) à partir d'un tissu possédant une propriété d'isolation thermique au rayonnement, comprenant un moyen isolant sous la forme d'un enduit en polyuréthane comportant des particules de matériau possédant des propriétés de réflexion du rayonnement thermique;
- mise sur forme de la chaussette (7) obtenue;
- surinjection d'un matériau plastique (2) sur la totalité de la surface occupée par la chaussette (7) pour obtenir une adhésion entre le matériau plastique (2) et la chaussette (7).

10. Procédé de fabrication d'une coque de chaussure selon la revendication 9, **caractérisé en ce qu**'il comprend en outre l'étape suivante avant la mise en forme de la chaussette (7):
- liaison (6) de la chaussette (7) possédant une échancrure avec un matériau plastique (1) pour former au mois un rabat couvrant l'échancrure;
et en ce que la surinjection du second matériau plastique (2) recouvre cette liaison (6) entre la chaussette (7) et le premier matériau plastique (1).

11. Procédé de fabrication d'une coque de chaussure selon la revendication 10, **caractérisé en ce qu**'il comprend en outre l'étape supplémentaire consistant à injecter un troisième matériau plastique (3) sur la zone de liaison (8) entre les deux premiers matériaux plastiques (1,2).

12. Procédé de fabrication d'une coque de chaussure selon l'une des revendications 9 à 11, **caractérisé en ce qu**'il comprend en outre l'étape de formation d'au moins un rabat par une liaison entre le premier ou le second matériau plastique (1; 2) et une partie très souple (4), en cuir, plastique ou tissu.

## Claims

1. A sports boot shell for boards for gliding of which at least part of the wall is composed of a sock (7) covered with a rigid layer in a plastics material (2), the sock (7) adhering to the plastics material (2), **characterized in that** the sock (7) includes, on its inner surface, an insulating means limiting losses of heat by radiation and **in that** the insulating means is a polyurethane coating that includes particles of material possessing properties of reflection of thermal radiation.

2. The sports boot shell as claimed in claim 1, **characterized in that** the insulating means is a polyurethane coating that includes aluminum particles.

3. The sports boot shell as claimed in claim 14 or 2, **characterized in that** the polyurethane coating forms a first inner layer of the sock, which is covered by an intermediate foam layer insulating against conduction of heat, then by a third layer in a compatible material in order to allow overmolding of a plastics material (2).

4. The sports boot shell as claimed in one of previous claims, **characterized in that** the sock (7) occupies a wide surface surrounding the foot and is connected (6) to a part in flexible plastics material (1) forming at least one flap over the instep.

5. The sports boot shell as claimed in claim 4, **characterized in that** the plastics material (1) is linked (5) to a very flexible part (4) in order to form at least one very flexible flap.

6. The sports boot shell as claimed in one of claims 4 or 5, **characterized in that** the plastics material (2) covers the sock (7) and its link (6) with the plastics material (1).

7. The sports boot shell as claimed in claim 6, **characterized in that** a third plastics material (3) covers the border zone (8) between the two plastics materials (1, 2).

8. A sports boot for boards for gliding that includes a shell as claimed in one of claims 1 to 7.

9. A process for manufacturing a sports boot shell for boards for gliding as claimed in one of claims 1 to 7, comprising the following steps:
- production of a sock (7) from a fabric having a property of thermal insulation against radiation, comprising an insulating means based on a polyurethane coating that includes particles of material possessing properties of reflection of thermal radiation;
- lasting of the sock (7) obtained;
- injection-overmolding of a plastics material (2) over the entire surface occupied by the sock (7) to get the adhesion between the plastics material (2) and the sock (7).

10. The process for manufacturing a boot shell as claimed in claim 9, **characterized in that** it also comprises the following step prior to lasting of the sock (7):
- linking (6) the sock (7) having a notch with a plastics material (1) in order to form at least one flap covering the notch;
and **in that** injection-overmolding of the second plastics material (2) covers this link (6) between the sock (7) and the first plastics material (1).

11. The process for manufacturing a boot shell as claimed in claim 10, **characterized in that** it also comprises the supplementary step consisting in injection-molding a third plastics material (3) over the linking zone (8) between the two first plastics materials (1, 2).

12. The process for manufacturing a boot shell as claimed in one of claims 9 to 11, **characterized in that** it also comprises the step of forming at least one flap via a link between the first or the second plastics material (1; 2) and a very flexible part (4), in leather, plastics or fabric.

## Patentansprüche

1. Schale eines Sportschuhs für ein Gleitbrett, bei der wenigstens ein Teil der Wand aus einer Innensocke (7) besteht, die mit einer steifen Schicht eines Kunststoffmaterials (2) bedeckt ist, an dem die Innensocke (7) haftet, **dadurch gekennzeichnet, dass** die Innensocke (7) auf ihrer Innenseite ein isolierendes Mittel aufweist, das wärmeverluste durch Strahlung begrenzt, und dass dieses isolierende Mittel ein Überzug aus Polyurethan ist, welcher Teilchen eines Materials mit Eigenschaften aufweist, welche Wärmestrahlung reflektieren.

2. Schale eines Sportschuhs nach Anspruch 1, **dadurch gekennzeichnet, dass** das isolierende Mittel ein Polyurethan-Überzug mit Aluminiumteilchen ist.

3. Schale eines Sportschuhs nach Anspruch 1 oder 2, **dadurch gekennzeichnet, dass** der Polyurethan-Überzug eine erste innere Schicht der Innensocke bildet, welche von einer Zwischenschicht aus einem gegen Wärmeleitung isolierenden Schaumstoff und einer dritten Schicht aus einem Material bedeckt ist, das dazu geeignet ist, mit einem Kunststoffmaterial (2) überformt zu werden.

4. Schale eines Sportschuhs nach einem der vorangehenden Ansprüche, **dadurch gekennzeichnet, dass** die Innensocke (7) eine grosse, den Fuss umgebende Oberfläche hat und mit einem Teil aus nachgiebigem Kunststoffmaterial (1) verbunden ist, welcher wenigstens eine Klappe auf dem Spann bildet.

5. Schale eines Sportschuhs nach Anspruch 4, **dadurch gekennzeichnet, dass** das Kunststoffmaterial (1) mit einem sehr nachgiebigen Teil (4) verbunden ist (5), um wenigstens eine sehr nachgiebige Klappe zu bilden.

6. Schale eines Sportschuhs nach einem der Ansprüche 4 oder 5, **dadurch gekennzeichnet, dass** das Kunststoffmaterial (2) die Innensocke (7) und ihre Verbindung (6) mit dem Kunststoffmaterial (1) überdeckt.

7. Schale eines Sportschuhs nach Anspruch 6, **dadurch gekennzeichnet, dass** ein drittes Kunststoffmaterial (3) den Grenzbereich (8) zwischen den beiden Kunststoffmaterialien (1, 2) überdeckt.

8. Sportschuh für ein Gleitbrett mit einer Schale nach einem der Ansprüche 1 bis 7.

9. Verfahren zur Herstellung einer Schale eines Sportschuhs für ein Gleitbrett nach einem der Ansprüche 1 bis 7 mit folgenden Schritten:
- Herstellung einer Innensocke (7) aus einem Gewebe mit einer wärmestrahlung isolierenden Eigenschaft, welches ein isolierendes Mittel in Form eines Polyurethan-Überzugs aufweist, der Teilchen mit Wärmestrahlung reflektierenden Eigenschaften enthält;
- Formung der erhaltenen Innensocke (7);
- Überspritzen der gesamten, von der Innensocke (7) eingenommenen Oberfläche mit einem Kunststoffmaterial (2), um eine Adhäsion zwischen dem Kunststoffmaterial (2) und der Innensocke (7) zu erhalten.

10. Verfahren nach Anspruch 9, **dadurch gekennzeichnet, dass** vor der Formung der Innensocke (7) ausserdem der folgende Schritt durchgeführt wird:
- Verbinden der Innensocke (7), die einen bogenförmigen Ausschnitt hat, mit einem Kunststoffmaterial (1), um wenigstens eine diesen Ausschnitt überdeckende Klappe zu bilden,
und dass beim Überspritzen mit dem zweiten Kunststoffmaterials (2) dieses Kunststoffmaterial die Verbindung (6) zwischen der Innensocke (7) und dem erstem Kunststoffmaterial (1) überdeckt.

11. Verfahren nach Anspruch 10, **dadurch gekennzeichnet, dass** es ausserdem den zusätzlichen Schritt umfasst, der darin besteht, ein drittes Kunststoffmaterial (3) auf den Bereich zu verspritzen, in welchem sich die Verbindung (8) zwischen den beiden ersten Kunststoffmaterialien (1, 2) befindet.

12. Verfahren nach einem der Ansprüche 9 bis 11, **dadurch gekennzeichnet, dass** es ausserdem den Schritt einer Bildung wenigstens einer Klappe umfasst, indem eine Verbindung zwischen dem ersten oder dem zweiten Kunststoffmaterial (1, 2) und einem sehr nachgiebigen Teil (4) aus Leder, Kunststoff oder Gewebe hergestellt wird.
